# EUROPÄISCHE PATENTSCHRIFT

(11) **EP 0 999 145 B1**
(45) Veröffentlichungstag und Bekanntmachung des Hinweises auf die Patenterteilung: **06.03.2002**
(21) Anmeldenummer: 99120737.4
(22) Anmeldetag: 20.10.1999
(51) Int. Cl.: B65D 19/28, B64G 1/22, B65D 19/44

(54) **Leichtbaupalette für Raumfahrzeuge**
Lightweight pallet for spacecrafts
Pallette légère pour véhicules spaciaux

(30) Priorität: 04.11.1998 DE 19850699
(43) Veröffentlichungstag der Anmeldung: 10.05.2000
(73) Patentinhaber: DaimlerChrysler Aerospace AG, 85521 Ottobrunn (DE)
(72) Erfinder: Jakel, Roland, Dr.-Ing., 28209 Bremen (DE); Golbeck, Ortwin Dipl.-Ing., 27798 Hude (DE)
(74) Vertreter: Hansmann, Dierk, Dipl.-Ing.

(56) Entgegenhaltungen:
- EP-A- 0 199 513
- WO-A-86/00866
- US-A- 3 592 145

## Beschreibung

Die Erfindung betrifft eine Leichtbaupalette für Raumfahrzeuge zur Aufnahme schwerer Lasten, bestehend aus je einer oberen und einer unteren Deckplatte in Form ebener Bleche, die durch eine Gitterstruktur miteinander verbunden sind.

Paletten dienen in der Raumfahrt dazu, Nutzlasten verschiedenster Art in das All, beispielsweise zu einer Raumstation, oder aus dem All zurück zur Erde zu transportieren. Zu diesem Zweck werden die Nutzlasten fest oder lösbar mit der Palette verbunden, und die Palette wird in ein Raumfahrzeug - üblicherweise dem sogenannten Space Shuttle - montiert. In diesem Zusammenhang stellt es eine bereits bekannte Maßnahme dar, die Nutzlastpalette mit Hilfe eines Jochs und einer Anzahl von Lagerzapfen in der Cargo-Bay, dem Nutzlastteil des Space Shuttle, zu befestigen.

Bei einer bekannten zu diesem Zweck entworfenen Palette sind eine obere und eine untere Frässtruktur über Distanzstücke sowie Zugbolzen miteinander verbunden und es sind für die Übertragung der auf die Palette einwirkenden Schubkräfte Bleche zwischen der oberen und unteren Frässtruktur eingeschraubt oder genietet. Bei einer weiteren derartigen Palette sind zwischen Längsträgern, die in der Regel als Strangpreßprofil hergestellt werden, kurze Zwischenträger befestigt und die Verbindungsmöglichkeit zur Nutzlast ist in das Strangpreßprofil integriert. Bei einer dritten bekannten Palette schließlich wird die Struktur von zahlreichen Winkeln, Blechen und anderen Halbzeugen gebildet, die durch Schrauben und Nieten zusammengefügt sind, und es müssen zur Befestigung von Nutzlasten und zur Erhöhung der Steifigkeit zusätzliche Platten zwischen die Träger eingeschraubt werden.

Diese bekannten Paletten zeichnen sich durch eine relativ geringe Steifigkeit, eine nicht immer beanspruchungsgerechte konstruktive Gestaltung und durch eine vergleichsweise hohe Eigenmasse aus. Dies schlägt sich in für Raumfahrtmissionen nachteilig niedrigen Eigenfrequenzen und einer nur geringen Nutzlastkapazität nieder. Außerdem sind die Fertigungs- und Montagekosten durch den komplizierten Aufbau dieser Paletten teilweise recht hoch. So ist das Fertigen von Frässtrukturen aus dicken Vollplatten zeitaufwendig und teuer, da mehr als 95 Prozent des Materials zerspant werden müssen. Außerdem können Spannungskonzentrationen entstehen, die die mögliche Nutzlast einer solchen Palette stark herabsetzen. Auch ist die Verbindung von Strukturteilen mittels Distanzstücken und Zugbolzen schwer und nur wenig beanspruchungsgerecht. Andererseits ist das Einnieten oder Schrauben von Schubblechen auf beiden Seiten des U-Querschnitts einer solchen Frässtruktur ungünstig im Hinblick auf ihr Beulverhalten.

Ein Teil dieser vorgenannten Nachteile wird durch eine Leichtbaupalette der eingangs genannten Art vermieden, die aus der EP 0 199 513 A2 bekannt geworden ist. Diese für eine Verwendung bei der Beförderung von Luftfracht vorgesehene bekannte Palette wird vollständig aus Aluminium gefertigt und bietet bei verhältnismäßig geringer Eigenmasse ein erhöhtes Maß an mechanischer Festigkeit.

Aufgabe der Erfindung ist es, eine derartige Leichtbaupalette so auszubilden, daß sie durch noch wesentlich verbesserte Festigkeits- und Steifigkeitseigenschaften bei zugleich möglichst leichtem Aufbau insbesondere für den Transport großer Lasten in Raumfahrzeugen geeignet ist.

Die Erfindung löst diese Aufgabe dadurch, daß sie bei einer derartigen Palette vorsieht, daß die Gitterstruktur von Längsträgern gebildet wird, deren Stege aus verrippten Schubfeldern bestehen und die über Querverbindungselemente miteinander verbunden sind, die eine Kreuzrippenstruktur aufweisen, und daß an den Stirnseiten der Längsträger und der Deckplatten Querträger angeordnet sind.

Die erfindungsgemäße Palette zeichnet sich durch einen besonders beanspruchungsgerechten modularen Aufbau aus nur wenigen verschiedenen Teilen, oftmals Gleich- bzw. Wiederholteilen, aus. Dabei ist der hoch beanspruchte Palettenbereich aus nur zwei gleichartigen und einfachen Bauteilen aufgebaut. Ein wesentlicher Vorteil der Palette nach der Erfindung besteht darin, daß im Kraftfluß keine Schwächungen oder Übergänge zu anderen Bauteilen vorhanden sind. Auch muß nur wenig Material zerspant werden, wodurch eine kostengünstige Herstellung aus einem ebenen Blech möglich ist. Schließlich kann die Dicke der Deckplatten auf einfache Weise der Masse der zu tragenden Nutzlast angepaßt werden.

Die erfindungsgemäße Palette kann trotz ihres extremen Leichtbaus aus einfachsten Bauteilen, wie metallischen Blechen, Halbzeugen oder Strangpreßprofilen sowie aus bereits zertifizierten Materialien aufgebaut werden; zusätzliche Zertifizierungen sind daher nicht erforderlich. Auch kann der numerische Nachweis der Strukturfestigkeit bei geänderter, an eine andere Nutzlast angepaßter Dicke der Deckplatten mit einem einzigen Finite-Elemente-Modell, lediglich durch Ändern der Eigenschaften der Schalenelemente, schnell und kostengünstig geführt werden. Ein aufwendiges Neumodellieren der Palette ist bei geänderter Nutzlastmasse somit nicht erforderlich und es können erhebliche Strukturverifikationskosten eingespart werden.

Ferner ist ein weitgehend modularer Aufbau der erfindungsgemäßen Palette aus vormontierten Segmenten möglich. In diesem Fall werden die äußeren Längsträger mehrerer Palettenmodule stirnseitig miteinander verbunden. Je nach Art der zu fliegenden Mission kann damit die Größe der Leichtbaupalette individuell den Erfordernissen angepaßt werden.

Die vorteilhaften Weiterbildungen der Erfindung sind durch die Merkmale der Unteransprüche gekennzeichnet.

Nachfolgend soll die Erfindung anhand eines in der Zeichnung dargestellten Ausführungsbeispiels näher erläutert werden. Es zeigen
- Fig. 1: eine perspektivische Darstellung einer Leichtbaupalette,
- Fig. 2 bis 4: Detaildarstellungen der in Fig. 1 dargestellten Anordnung,
- Fig. 5: eine Darstellung der Leichtbaupalette gemäß Fig. 1 aus einer anderen Perspektive und
- Fig. 6: die Montage der Palette gemäß Fig. 1 an einer Struktur.

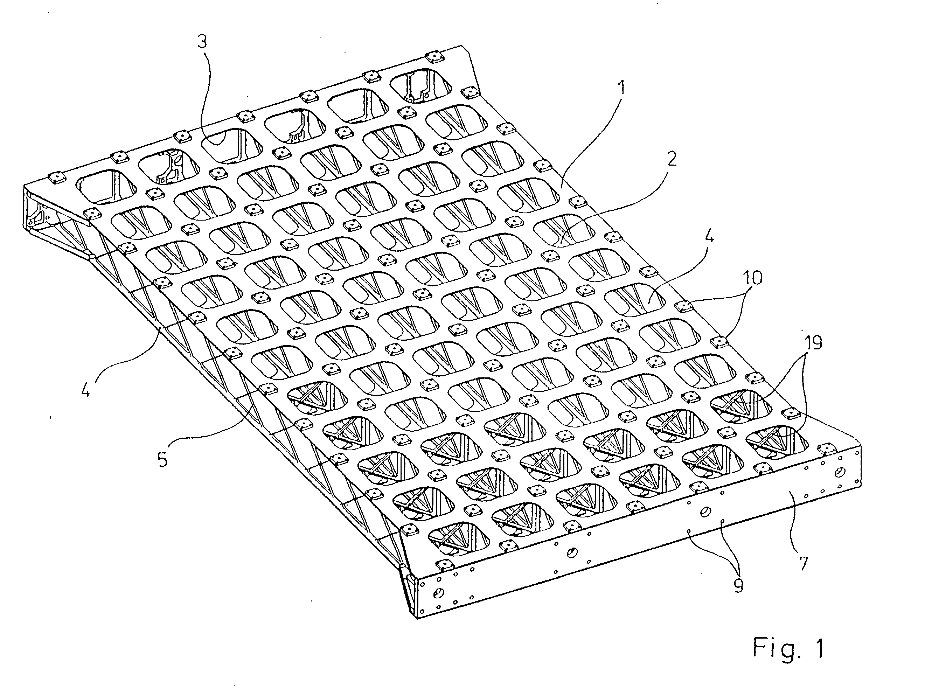

Bei der in den Figuren 1 bis 6 dargestellten Leichtbaupalette sind die besonders hoch auf Zug- oder Druck beanspruchten Ober- und Unterseiten der Palette aus zwei gleichartig aufgebauten Deckplatten 1 und 2 hergestellt. Bei diesen handelt es sich um ebene Bleche, in die rechteckige Aussparungen 3 mit spannungsreduzierenden Verrundungen eingebracht sind.

Die beiden Deckplatten 1 und 2 sind in Längsrichtung durch mehrere gleichartig aufgebaute Träger 4 verbunden. Die Verbindung kann dabei durch Schrauben, Nieten, Kleben oder Schweißen erfolgen. Diese Längsträger 4, die im Fall des hier dargestellten Ausführungsbeispiels eine I-Form aufweisen, können aus einfachen Halbzeugen, beispielsweise aus Strangpreßprofilen oder einfachen Blechen, kostengünstig hergestellt werden.

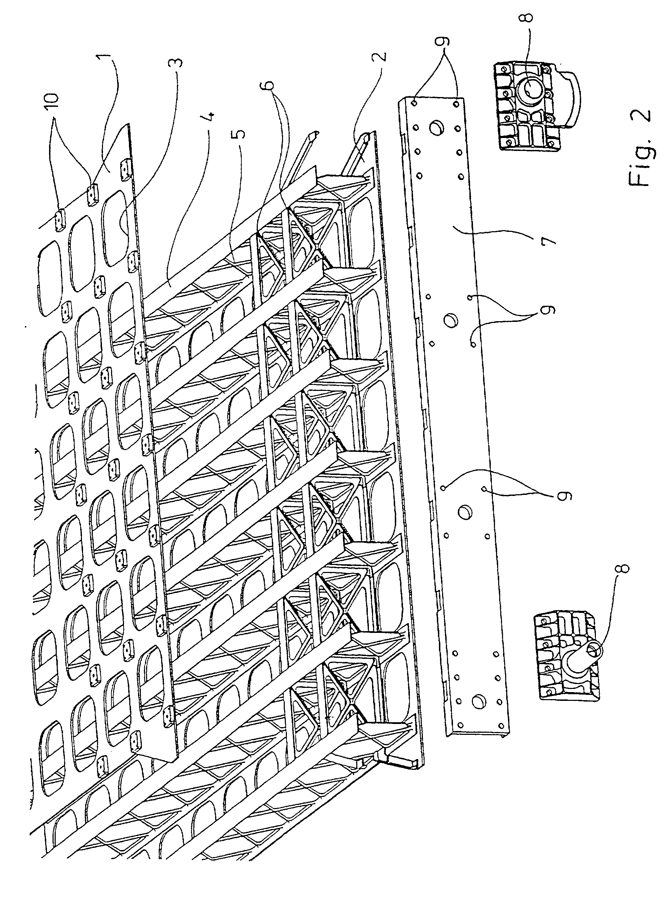

Zum Erreichen eines optimal steifen Schubverbundes zwischen den beiden Deckplatten 1 und 2 bei gleichzeitig minimaler Strukturmasse sind die Stege der Längsträger formoptimiert gestaltet. Wie aus Fig. 2 ersichtlich handelt es sich im Fall des hier dargestellten Ausführungsbeispiels um dünne Schubwände, die mit in regelmäßigen Abständen mit Kreuzrippen 5 zur Erhöhung der kritischen Beulspannung versteift sind.

In Querrichtung der Palette sind, wie insbesondere die Darstellung in Fig. 2 zeigt, zwischen den Längsträgern 4 und den Deckplatten 1 und 2 zahlreiche Querverbindungselemente 6 angeordnet, die ebenfalls durch Schrauben, Nieten, Kleben oder Schweißen befestigt sind. Im hier dargestellten Ausführungsbeispiel handelt es sich bei den Querverbindungselementen 6 um Frästeile mit einer Kreuzrippenstruktur. Diese auf Zug und/oder Druck beanspruchten Kreuzrippen stellen eine besonders steife und massearme Verbindung zwischen den Trägern 4 her, woraus eine hohe Eigenfrequenz der Palette resultiert. Lasten, die nur auf einem Längsträger 4 befestigt werden, werden über die Kreuzrippen auf benachbarte Längsträger abgeleitet. Durchbrüche in den Querverbindungselementen 6 ermöglichen das Verlegen von Leitungen in der Längsrichtung der Palette zur Versorgung der Nutzlasten. Auch die Querverbindungselemente 6 können als Massenteil relativ preiswert aus kleinen Halbzeugen hergestellt werden.

An den Stirnseiten der Längsträger 4 und der Deckplatten 1 und 2 sind stabile Querträger 7 angeordnet, die die Lasten aus der Palette an Lagerzapfen 8 weiterleiten. Die Querträger können, wie bei dem hier dargestellten Ausführungsbeispiel, mit einem Lochmuster 9 versehen sein, um die Lagerzapfen 8 wahlweise an unterschiedlichen Stellen anbringen zu können.

Auf der oberen Deckplatte 1 der Leichtbaupalette können verschiedene Verbindungskonstruktionen zur Befestigung von Nutzlasten angebracht sein. In Fig. 1 und 2 sind dies Knotenbleche 10, die ein Aufnahmegewinde oder einen Bajonettverschluß für die aufzunehmende Nutzlast enthalten. Diese Knotenbleche 10 können ebenfalls als preiswertes Massenteil gefertigt werden. Wird ein Nutzlastaufnahmegewinde in einem der Knotenbleche 10 beschädigt, so kann eine einfache und kostengünstige Reparatur durch Austausch dieses Knotenbleches erfolgen.

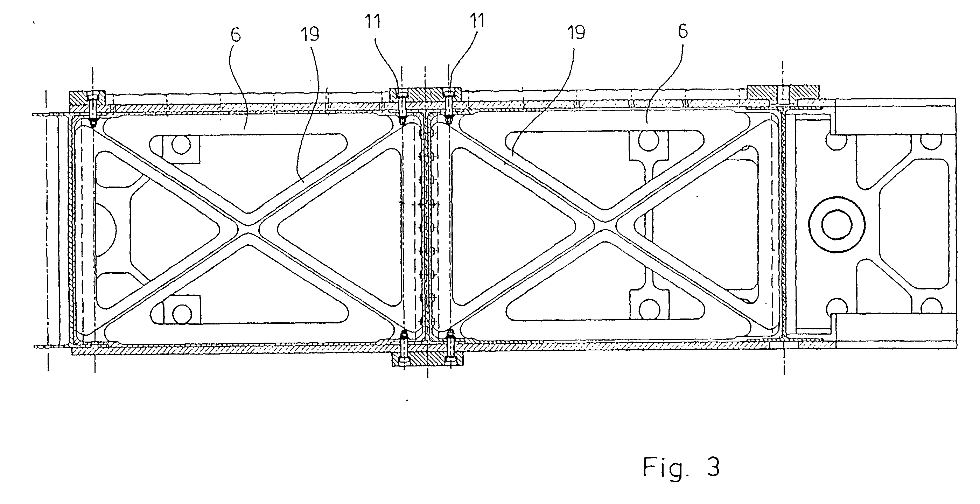

Bei der Befestigung der Knotenbleche 10 an der oberen Deckplatte 1 mittels Schrauben 11, wie im Detail in Fig. 3 dargestellt, können die mechanischen Beanspruchungen, die aus dem Gewicht der Nutzlast resultieren, direkt in die Kreuzstreben 19 der Querverbindungselemente 6 weitergeleitet werden. In den Bereichen der Lasteinleitung wird die Deckplatte 1 somit durch die Knotenbleche 10 verstärkt.

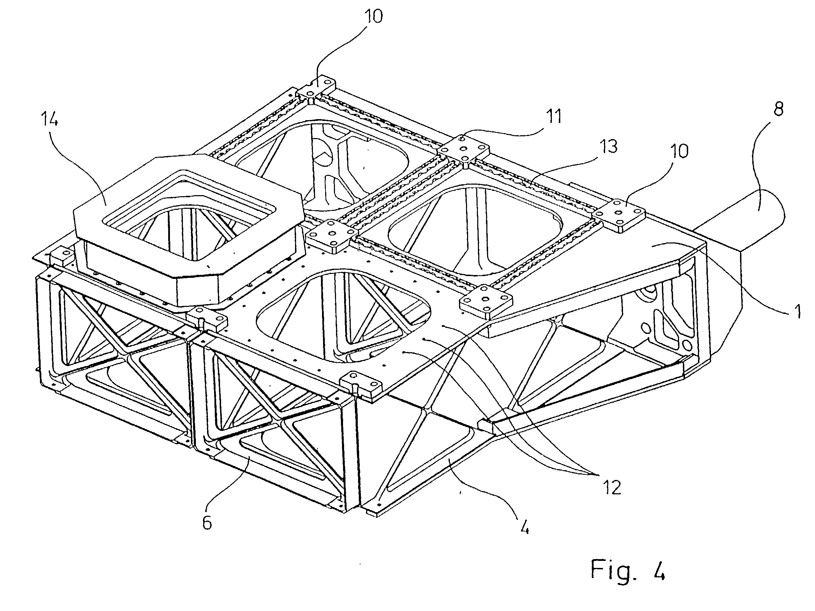

An ein in der Deckplatte 1 vorgesehenes Lochmuster 12 können ferner gemäß Fig. 4 bei Bedarf verschiedene andere Verbindungselemente, beispielsweise sogenannte Seat-Tracks 13 oder Klemmaufsätze 14, angebracht werden.

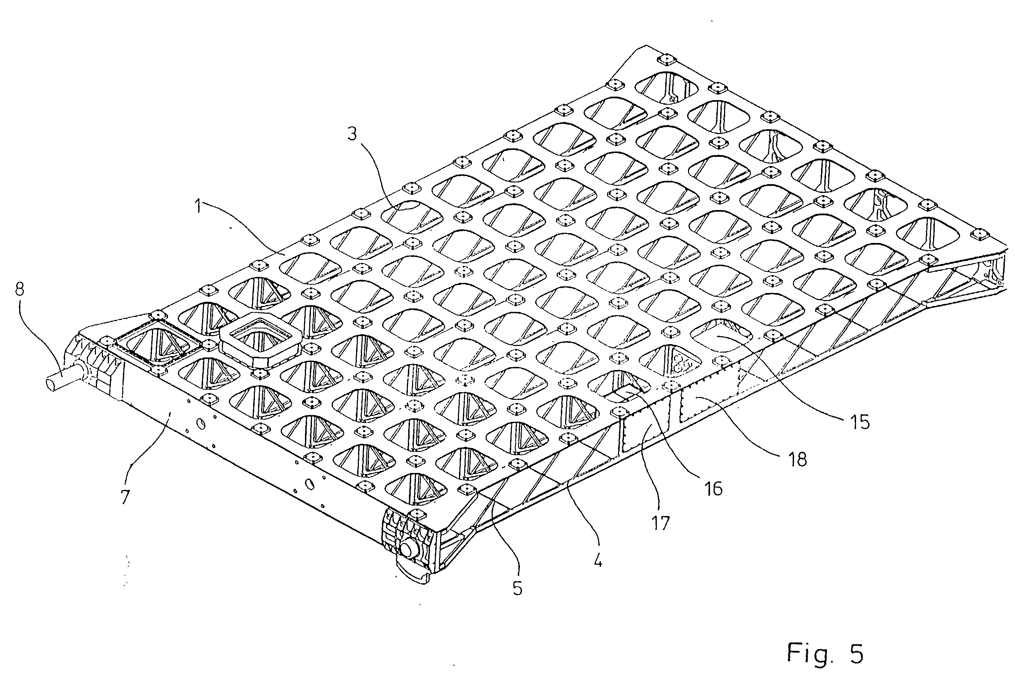

Zur Versorgung der Nutzlasten mit elektrischer Energie oder zur Weiterleitung von Informationen können, wie in Fig. 5 dargestellt, in der Palette Stromversorgungsgeräte 15 oder Rechner 16 versenkt angeordnet werden. Diese beiden Komponenten werden durch Aussparungen im äußeren Längsträger 4 montiert, die ihrerseits mit Schubblechen 17 bzw. 18 verschlossen werden. Die versenkte Unterbringung dieser Geräte 15, 16 im Inneren der Palette verhindert mögliche Kollisionen mit aufgeschraubten Nutzlasten. Das Einbringung der Geräte durch die Aussparungen im Steg des äußeren Längsträgers 4 stellt außerdem sicher, daß die besonders hoch beanspruchten Deckplatten 1,2 der Leichtbaupalette nicht geschwächt wird. Das Verschließen der Löcher im Längsträger 4 mit den Schubblechen 17 und 18 stellt zudem die ursprüngliche Steifigkeit des Längsträgers 4 wieder her.

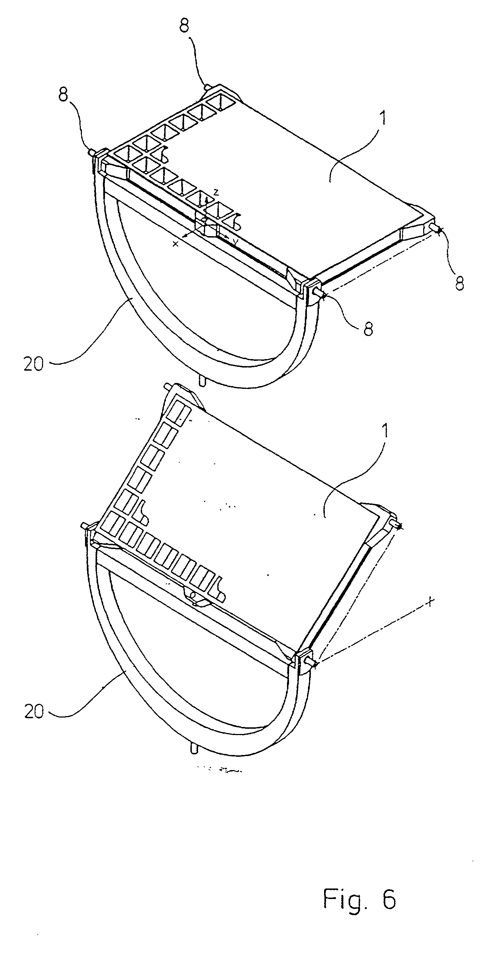

Wie schließlich in Fig. 6 gezeigt ist, wird die Palette mit Hilfe eines Jochs 20 und der Lagerzapfen 8 in der Cargo-Bay, dem Nutzlastbereich eines Raumfahrzeuges, gehaltert.

## Patentansprüche

1. Leichtbaupalette für Raumfahrzeuge zur Aufnahme schwerer Lasten, bestehend aus je einer oberen (1) und einer unteren (2) Deckplatte in Form ebener Bleche, die durch eine Gitterstruktur miteinander verbunden sind, **dadurch gekennzeichnet, daß** die Gitterstruktur von Längsträgern (4) gebildet wird, deren Stege aus verrippten Schubfeldern (5) bestehen und die über Querverbindungselemente (6) miteinander verbunden sind, die eine Kreuzrippenstruktur (19) aufweisen, und daß an den Stirnseiten der Längsträger (4) und der Deckplatten (1, 2) Querträger (7) angeordnet sind.

2. Leichtbaupalette nach Anspruche 1, **dadurch gekennzeichnet, daß** an den Kreuzungspunkten von Längsträgern (4) und Querverbindungselementen (6) Knotenbleche (10) auf der oberen und unteren Deckplatte (1,2) befestigt sind.

3. Leichtbaupalette nach einem der Ansprüche 1 oder 2, **dadurch gekennzeichnet, daß** die Längsträger (4) gewichts- und festigkeitsoptimierte Aussparungen aufweisen.

4. Leichtbaupalette nach einem der Ansprüche 1 bis 3 **dadurch gekennzeichnet, daß** die Querverbindungselemente (6) gewichts- und festigkeitsoptimierte Aussparungen aufweisen.

5. Leichtbaupalette nach einem der Ansprüche 1 bis 4 **dadurch gekennzeichnet, daß** die Querträger (7) mit Lagerzapfen (8) versehen sind.

6. Leichtbaupalette nach einem der Ansprüche 1 bis 5, **dadurch gekennzeichnet, daß** an den äußeren Längsträgern (4) Aussparungen zum versenkten Befestigen von Nutzlast-Versorgungsaggregaten (15, 16) angebracht sind, die durch Schubbleche (17, 18) verschließbar sind.

7. Leichtbaupalette nach einem der Ansprüche 1 bis 6, **dadurch gekennzeichnet, daß** in den Deckplatten (1, 2) Aussparungen (3) in Form verrundeter Quadrate angebracht sind.

8. Leichtbaupalette nach einem der Ansprüche 1 bis 7, **dadurch gekennzeichnet, daß** in den Deckplatten (1, 2) Lochmuster (12) zur Befestigung von Verbindungselementen (13, 14) und Nutzlasten angebracht sind.

## Claims

1. Pallet of lightweight construction for space vehicles for the purpose of receiving heavy loads, the said pallet consisting of an upper (1) and a lower (2) cover plate in each case in the form of flat metal sheets, which are connected to one another by a lattice structure, **characterised in that** the lattice structure is formed by longitudinal girders, the webs of which consist of ribbed thrust panels (5) and which are connected to one another via transverse connecting elements (6) which have a cross-rib structure (19), and that transverse girders (7) are disposed on the end faces of the longitudinal girders (4) and of the cover plates (1, 2).

2. Pallet of lightweight construction according to claim 1, **characterised in that** nodal metal sheets (10) are fastened on the upper and lower covering plate (1, 2) at the points of intersection of longitudinal girders (4) and transverse connecting elements (6).

3. Pallet of lightweight construction according to one of claims 1 or 2, **characterised in that** the longitudinal girders (4) have clearances which are optimised in respect of weight and strength.

4. Pallet of lightweight construction according to one of claims 1 to 3, **characterised in that** the transverse connecting elements (6) have clearances which are optimised in respect of weight and strength.

5. Pallet of lightweight construction according to one of claims 1 to 4, **characterised in that** the transverse girders (7) are provided with bearing pins (8).

6. Pallet of lightweight construction according to one of claims 1 to 5, **characterised in that** clearances for the recessed fastening of payload supply units (15, 16), which clearances can be closed by thrust-type metal sheets, are located on the outer longitudinal girders (4).

7. Pallet of lightweight construction according to one of claims 1 to 6, **characterised in that** clearances (3) in the form of rounded squares are located in the cover plates (1, 2).

8. Pallet of lightweight construction according to one of claims 1 to 7, **characterised in that** patterns of holes (12) for fastening connecting elements (13, 14) and payloads are located in the cover plates (1, 2).

## Revendications

1. Palette légère pour véhicules spatiaux destinée à recevoir de lourdes charges, composée de deux panneaux de recouvrement supérieur (1) et inférieur (2) en de tôles lisses reliées l'une à l'autre par une structure grillagée, **caractérisée en ce que** est constituée une structure grillagée de supports longitudinaux (4) dont les entretoises sont formées à partir de champs de poussée (5) nervurés et reliés l'un à l'autre par l'intermédiaire d'éléments de raccordement transversaux (6) à structure nervurée en croix (19) et **en ce que** des supports transversaux (7) sont disposés sur les surfaces d'attaque des supports longitudinaux et des panneaux de recouvrement (1, 2).

2. Palette légère selon la revendication 1, **caractérisée en ce que** des plaques d'éclissage (10) sont fixées sur les plaques de recouvrement (1, 2) supérieure et inférieure, aux points d'intersection des supports longitudinaux (4) et des éléments de raccordement transversaux (6).

3. Palette légère selon la revendication 1 ou 2, **caractérisée en ce que** les supports longitudinaux présentent des évidements optimalisés en fonction du poids et de la solidité.

4. Palette légère selon une des revendications 1 à 3, **caractérisée en ce que** les éléments de raccordement transversaux (6) présentent des évidements optimalisés en fonction du poids et de la solidité.

5. Palette légère selon une des revendications 1 à 4, **caractérisée en ce que** les supports transversaux (7) sont équipés de tourillons (8).

6. Palette légère selon une des revendications 1 à 5, **caractérisée en ce que** des évidements destinés à fixer des agrégats de services à charge utile (15, 16) par enfoncement et verrouillables à l'aide de tôles de poussée (17, 18) ont été pratiqués contre les supports longitudinaux (4) extérieurs.

7. Palette légère selon une des revendications 1 à 6, **caractérisée en ce que** des évidements (3) en forme de carrés arrondis ont été pratiqués dans les panneaux de recouvrement (1, 2).

8. Palette légère selon une des revendications 1 à 7, **caractérisée en ce que** des écrous à trous (12) ont été placés dans les panneaux de recouvrement (1, 2) afin de fixer des éléments de raccordement (13, 14) et des charges utiles.
